# EUROPEAN PATENT APPLICATION

(11) **EP 4 517 887 A1**
(43) Date of publication of application: **05.03.2025**
(21) Application number: 23795949.9
(22) Date of filing: 16.03.2023
(51) Int. Cl.: H01M 4/86, H01M 8/12, H01M 8/1213, H01M 8/1253, H01M 8/126

(54) **MEMBRANE ELECTRODE ASSEMBLY, ELECTROCHEMICAL CELL, AND FUEL CELL SYSTEM**

(30) Priority: 26.04.2022 JP 2022072718
(71) Applicant: Panasonic Holdings Corporation, Osaka, 571-8501 (JP)
(72) Inventor: MIKAMI, Yuichi, Kadoma-shi, Osaka 571-0057 (JP); NAKATA, Yuki, Kadoma-shi, Osaka 571-0057 (JP); NUNOO, Kosuke, Kadoma-shi, Osaka 571-0057 (JP); KUROHA, Tomohiro, Kadoma-shi, Osaka 571-0057 (JP)
(74) Representative: Grünecker Patent- und Rechtsanwälte PartG mbB
(86) International application number: PCT/JP2023/010404
(87) International publication number: WO 2023/210202

(57) **Abstract**

A membrane electrode assembly of the present disclosure is a membrane electrode assembly including a first electrode and an electrolyte membrane that contains an oxide having proton conductivity, in which the first electrode contains a first oxide and a second oxide, the first oxide is a first perovskite compound represented by Compositional Formula ABO₃, where in the first perovskite compound, constituent elements of an A site include at least one selected from the group consisting of La, Sr, and Ba, and constituent elements of a B site include at least one selected from the group consisting of Co and Fe, and the second oxide is a second perovskite compound formed of Ba, Zr, Yb, one or more of first transition elements including at least Co, and O.

## Description

### Technical Field

The present disclosure relates to a membrane electrode assembly, an electrochemical cell, and a fuel cell system.

### Background Art

A solid oxide fuel cell (hereinafter, referred to as "SOFC") is a fuel cell that uses a solid oxide as an electrolyte constituting an electrolyte membrane. An oxide ion conductor typified by stabilized zirconia has been widely used as a solid oxide serving as an electrolyte. The SOFC operates at a high temperature of 600°C or higher and has higher power generation efficiency than that of a polymer electrolyte fuel cell (PEFC) known as a low-temperature type fuel cell.

A proton ceramic fuel cell (hereinafter, referred to as "PCFC") which is a type of SOFC is formed such that a solid oxide having proton conductivity is used as an electrolyte constituting an electrolyte membrane. In a typical SOFC, water vapor is generated on a fuel electrode side due to a power generation reaction. Therefore, in an operating environment with a high fuel utilization rate, hydrogen serving as a fuel is diluted with water vapor, and thus the risk of a decrease in electromotive force of a fuel cell or deterioration of a cell due to fuel shortage is increased. Therefore, a typical SOFC is not capable of sufficiently increasing the fuel utilization rate.

Meanwhile, in a PCFC that uses a proton conductor as an electrolyte, since the generation of water vapor due to the power generation reaction proceeds on an air electrode side, dilution of hydrogen is suppressed by a fuel electrode. In this manner, since the electromotive force of the fuel cell can be maintained high even when the PCFC is operated at a high fuel utilization rate and the risk of fuel shortage can be reduced, it is advantageous that the PCFC is operated at a high fuel utilization rate. The power generation efficiency of a fuel cell is expressed as the product of the voltage of a cell and the fuel utilization rate, and thus the PCFC that can achieve both a high fuel utilization rate and a high electromotive force can be expected to have particularly high power generation efficiency among SOFCs.

In the SOFC, since the electrolyte membrane and the electrode are formed of a solid oxide, bonding failure at an interface between different kinds of oxide materials is likely to be a problem. Specifically, an increase in ohmic resistance due to the bonding failure at the interface between the electrolyte membrane and the electrode is problematic. Further, there is a risk of cell destruction due to peeling when the bonding failure at the interface between the electrolyte membrane and the electrode is significant.

Particularly in the materials constituting the SOFC, since a different in thermal expansion coefficient between an air electrode material and an electrolyte constituting an electrolyte membrane is large, a stress is likely to be accumulated at the interface between materials in a case of preparation of a cell and starting and stopping of a cell, and thus the risk of bonding failure and peeling is increased. For example, the thermal expansion coefficient of yttria stabilized zirconia, which is a typical electrolyte, is 11 × 10⁻⁶/K, while the thermal expansion coefficient of a LaSrCoFe composite oxide, which is a typical air electrode material, is 15×10⁻⁶/K. Combinations of these materials have been put into practical use. However, the thermal expansion coefficients of other air electrode materials, for example, a LaSrCo composite oxide and a LaBaCo composite material are respectively about 18×10⁻⁶/K and 20×10⁻⁶/K, which are greater than those of the typical materials described above, and thus the risk of electrode peeling is increased.

When the air electrode material for an SOFC as described above is used in a PCFC, the risk of bonding failure at the interface between the air electrode and the electrolyte membrane is further increased. For example, a BaZrYb composite oxide may be used as the electrolyte for a typical PCFC. The thermal expansion coefficient of the BaZrYb composite oxide is in a range of 8×10⁻⁶/K to 9×10⁻⁶/K, which is a value less than the thermal expansion coefficient of the yttria stabilized zirconia serving as an electrolyte of a typica SOFC. Therefore, a difference in thermal expansion coefficient between the air electrode material and the electrolyte is further increased in a case of the PCFC. In addition, since a proton conductor exhibits proton conductivity when water is dissolved in a crystal lattice, expansion and contraction are known to occur due to hydration in addition to thermal expansion. The amount of hydration changes depending on the temperature and the concentration of water vapor, and thus expansion and contraction occur during various actions of starting and stopping and operations. In this manner, it is considered that the bonding failure at the interface between the air electrode and the electrolyte membrane is further promoted.

Therefore, when the air electrode material for an SOFC is used in a PCFC, it is important to maintain bonding at the interface between the air electrode and the electrolyte membrane and to suppress an increase in ohmic resistance and peeling.

Examples of a typical method for improving bonding at the interface between the air electrode and the electrolyte membrane include a method of mixing an electrolyte used in an electrolyte membrane with an air electrode to obtain a composite electrode. For example, in the PCFC disclosed in NPL 1, a BaCeZrYYb composite oxide is used as the electrolyte for forming the electrolyte membrane, and a LaSrCoFe composite oxide, a LaSrCo composite oxide, or a mixture of a LaBaCo composite oxide and a BaCeZrYYb composite oxide is used for the air electrode. That is, the electrolyte forming the electrolyte membrane is also mixed with the air electrode in the PCFC disclosed in NPL 1. This configuration is advantageous for bonding at the interface between the air electrode and the electrolyte membrane and has an effect of suppressing peeling.

### Citation List

### Non Patent Literature

NPL 1: H. Shimada et al., "Electrochemical Performance of Anode-Supported Protonic Ceramic Fuel Cells with Various Composite Cathodes", ECS Transactions, 91 (1) 1075-1083 (2019)

### Summary of Invention

### Technical Problem

As described above, examples of a typical method for improving the bonding properties at the interface between the air electrode and the electrolyte membrane include a method of mixing the electrolyte used in the electrolyte membrane with the air electrode to obtain a composite electrode. However, the present inventors have newly found that the above-described method is not necessarily effective from the viewpoint of suppressing an increase in ohmic resistance.

An object of the present disclosure is to provide a membrane electrode assembly capable of being applied to a PCFC and suppressing an increase in ohmic resistance. Solution to Problem

According to the present disclosure, there is provided a membrane electrode assembly including a first electrode, and an electrolyte membrane that contains an oxide having proton conductivity, in which the first electrode contains a first oxide and a second oxide, the first oxide is a first perovskite compound represented by Compositional Formula ABO₃, where in the first perovskite compound, constituent elements of an A site include at least one selected from the group consisting of La, Sr, and Ba, and constituent elements of a B site include at least one selected from the group consisting of Co and Fe, and the second oxide is a second perovskite compound formed of Ba, Zr, Yb, one or more of first transition elements including at least Co, and O.

### Advantageous Effects of Invention

According to the present disclosure, it is possible to provide a membrane electrode assembly capable of being applied to a PCFC and suppressing an increase in ohmic resistance.

### Brief Description of Drawings

[Fig. 1A] Fig. 1A is a cross-sectional view showing a membrane electrode assembly according to Embodiment 1.
[Fig. 1B] Fig. 1B is a cross-sectional view showing an electrochemical cell according to Embodiment 2.
[Fig. 2] Fig. 2 shows a fuel cell system according to Embodiment 3.
[Fig. 3] Fig. 3 shows a Nyquist plot measured using an electrochemical cell in Example 1.
[Fig. 4] Fig. 4 shows a Nyquist plot measured using an electrochemical cell in Example 2.
[Fig. 5] Fig. 5 shows a Nyquist plot measured using an electrochemical cell in Example 3.
[Fig. 6] Fig. 6 shows a Nyquist plot measured using an electrochemical cell in Example 4.
[Fig. 7] Fig. 7 shows a Nyquist plot measured using an electrochemical cell in Comparative Example 1.
[Fig. 8] Fig. 8 shows a Nyquist plot measured using an electrochemical cell in Comparative Example 2.
[Fig. 9] Fig. 9 shows a Nyquist plot measured using an electrochemical cell in Comparative Example 3.
[Fig. 10] Fig. 10 shows a Nyquist plot measured using an electrochemical cell in Comparative Example 4.
[Fig. 11] Fig. 11 shows a Nyquist plot measured using an electrochemical cell in Comparative Example 5.
[Fig. 12] Fig. 12 shows a Nyquist plot measured using an electrochemical cell in Comparative Example 6.
[Fig. 13] Fig. 13 shows a Nyquist plot measured using an electrochemical cell in Comparative Example 7.
[Fig. 14] Fig. 14 shows a Nyquist plot measured using an electrochemical cell in Comparative Example 8.
[Fig. 15] Fig. 15 shows a Nyquist plot measured using an electrochemical cell in Comparative Example 9.
[Fig. 16] Fig. 16 shows a Nyquist plot measured using an electrochemical cell in Comparative Example 10.

### Description of Embodiments

### (Underlying knowledge forming basis of the present disclosure)

In NPL 1, a mixture of an air electrode material for an SOFC and a proton conductor electrolyte material used in the electrolyte membrane is used in the air electrode. However, the present inventors have found that the above-described configuration is not necessarily effective from the viewpoint of suppressing an increase in ohmic resistance between the air electrode and the electrolyte membrane.

A specific reason for this is that the proton conductor electrolyte material has poor electron conductivity. When the proton conductor electrolyte material is mixed with the air electrode material, a bonding path between the electrode materials for an SOFC with high electron conductivity in the air electrode is cut off. In this manner, the proton conductor electrolyte material mixed with the electrode material decreases the electron conductivity of the entire electrode. As a result, the ohmic resistance in the membrane electrode assembly provided with the electrode and the electrolyte membrane is increased.

Here, as a result of intensive examination on the method of suppressing an increase in ohmic resistance of the membrane electrode assembly when the air electrode material for an SOFC is used in a PCFC, the present inventors have found the following findings. That is, the present inventors found that the ohmic resistance of the membrane electrode assembly can be reduced by mixing an oxide having a perovskite structure and formed of Ba, Zr, Yb, one or more of first transition elements including at least Co, and O with the air electrode material for an SOFC, thereby completing the present disclosure described below.

### (Outline of aspects according to present disclosure)

According to a first aspect of the present disclosure, there is provided a membrane electrode assembly including: a first electrode; and an electrolyte membrane that contains an oxide having proton conductivity, in which the first electrode contains a first oxide and a second oxide, the first oxide is a first perovskite compound represented by Compositional Formula ABO₃, where in the first perovskite compound, constituent elements of an A site include at least one selected from the group consisting of La, Sr, and Ba, and constituent elements of a B site include at least one selected from the group consisting of Co and Fe, and the second oxide is a second perovskite compound formed of Ba, Zr, Yb, one or more of first transition elements including at least Co, and O.

The membrane electrode assembly according to the first aspect is capable of being applied to a PCFC and suppressing an increase in ohmic resistance.

According to a second aspect, for example, in the membrane electrode assembly according to the first aspect, the second oxide may be formed of Ba, Zr, Yb, Co, and O.

The membrane electrode assembly according to the second aspect is capable of being applied to a PCFC and suppressing an increase in ohmic resistance.

According to a third aspect, for example, in the membrane electrode assembly according to the first or second aspect, the first oxide satisfies any one of the following items (1) to (4).
(1) The constituent elements of the A site include La and Sr, and the constituent elements of the B site include Co and Fe.
(2) The constituent elements of the A site include La and Sr, and the constituent elements of the B site include Co.
(3) The constituent elements of the A site include La and Ba, and the constituent elements of the B site include Co.
(4) The constituent elements of the A site include La, and the constituent elements of the B site include Co.

The membrane electrode assembly according to the third aspect is capable of being applied to a PCFC and suppressing an increase in ohmic resistance.

According to a fourth aspect, for example, in the membrane electrode assembly according to any one of the first to third aspects, the first electrode and the electrolyte membrane may be in contact with each other.

The membrane electrode assembly according to the fourth aspect is capable of being applied to a PCFC and suppressing an increase in ohmic resistance. In the configuration in which the first electrode and the electrolyte membrane are in direct contact with each other, as in the membrane electrode assembly according to the fourth aspect, typically, interface bonding due to a difference in thermal expansion coefficient between the first electrode and the electrolyte membrane tends to be a problem. However, according to the configuration of the membrane electrode assembly of the fourth aspect, the interface bonding between the first electrode and the electrolyte membrane can be improved, and the ohmic resistance can be reduced.

According to a fifth aspect, for example, in the membrane electrode assembly according to any one of the first to fourth aspects, the electrolyte membrane may contain at least one selected from the group consisting of a compound represented by Chemical Formula Baₐ₁Zr₁₋ₓ₁M1ₓ₁O_{3-δ1}, a compound represented by Chemical Formula Baₐ₂Ce₁₋ₓ₂M2ₓ₂O_{3-δ2}, and a compound represented by Chemical Formula Baₐ₃Zr_{1-x3-y3}Ceₓ₃M3_{y3}O_{3-δ3}, M1, M2, and M3 may each contain at least one selected from the group consisting of Pr, Nd, Pm, Sm, Eu, Gd, Tb, Dy, Ho, Er, Tm, Yb, Y, Sc, In, and Lu, and expressions of 0.95 ≤ a1 ≤ 1.05, 0.95 ≤ a2 ≤ 1.05, 0.95 ≤ a3 ≤ 1.05, 0 < x1 < 1, 0 < x2 < 1, 0 < x3 < 1, 0 < y3 < 1, 0 < δ1 < 1, 0 < δ2 < 1, and 0 < δ3 < 1 may be satisfied.

According to the fifth aspect, since the electrolyte membrane contains a material having excellent proton conductivity, the ohmic resistance of the membrane electrode assembly can be reduced.

According to a sixth aspect, for example, in the membrane electrode assembly according to the fifth aspect, M1 may represent Yb.

Since a proton conductive electrolyte containing Yb has high proton conductivity, the membrane electrode assembly according to the sixth aspect can reduce the ohmic resistance between the first electrode and the electrolyte membrane.

According to a seventh aspect of the present disclosure, there is provided an electrochemical cell including: the membrane electrode assembly according to any one of the first to sixth aspects; and a second electrode, in which the first electrode, the electrolyte membrane, and the second electrode are provided in this order.

According to the seventh aspect, an electrochemical cell with high efficiency, in which the ohmic resistance between the first electrode and the electrolyte membrane is reduced, can be provided.

According to an eighth aspect, for example, in the electrochemical cell according to the seventh aspect, the second electrode contains at least one selected from the group consisting of NiO and Ni.

According to the eighth aspect, an electrochemical cell with high efficiency can be provided.

According to a ninth aspect, there is provided a fuel cell system including: the electrochemical cell according to the seventh or eighth aspect; an oxidant gas supply path; and a raw material gas supply path, in which the first electrode is connected to the oxidant gas supply path, and the second electrode is connected to the raw material gas supply path.

According to the ninth aspect, a fuel cell system with high efficiency, including an electrochemical cell with high efficiency in which the ohmic resistance between the first electrode and the electrolyte membrane is reduced, can be provided.

### (Embodiments of the present disclosure)

Hereinafter, embodiments of the present disclosure will be described with reference to the accompanying drawings.

### (Embodiment 1)

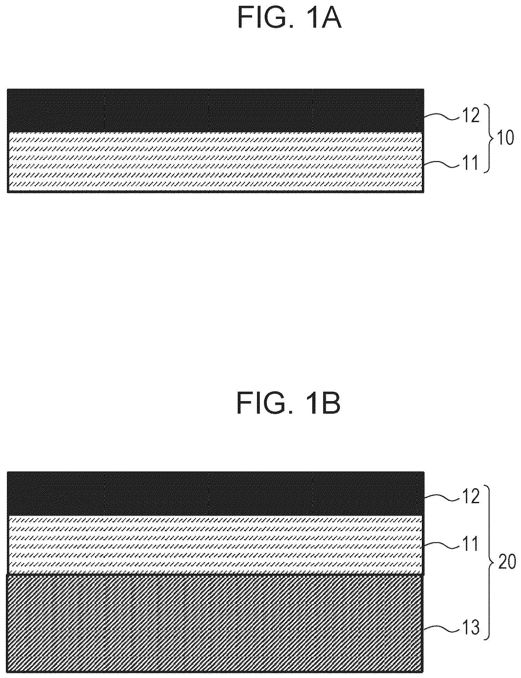

Fig. 1A is a cross-sectional view showing a membrane electrode assembly 10 according to Embodiment 1. The membrane electrode assembly 10 includes an electrolyte membrane 11 and a first electrode 12. For example, the electrolyte membrane 11 is provided on a first main surface 12a of the first electrode 12.

The first electrode 12 contains a first oxide and a second oxide.

The first oxide is a first perovskite compound represented by Compositional Formula ABO₃. In the first perovskite compound, constituent elements of the A site include at least one selected from the group consisting of La, Sr, and Ba, and constituent elements of the B site include at least one selected from the group consisting of Co and Fe. The first oxide is a typical electrode material in the SOFC. Examples of the first oxide include a lanthanum strontium cobalt iron composite oxide, a lanthanum strontium cobalt composite oxide, a lanthanum strontium iron composite oxide, a lanthanum barium cobalt composite oxide, a lanthanum barium iron composite oxide, a lanthanum barium cobalt iron composite oxide, and a barium strontium cobalt iron composite oxide.

The second oxide is a second perovskite compound formed of Ba, Zr, Yb, one or more of first transition elements including at least Co, and O. That is, the second oxide is any of the following oxide (i) or (ii).
(i) A composite oxide having a perovskite structure and formed of Ba, Zr, Yb, Co, and O
(ii) A composite oxide having a perovskite structure and formed of Ba, Zr, Yb, Co, a first transition element other than Co, and O

As described above, the second oxide contains Co as the first transition element. When the second oxide is the oxide (i) described above, the element contained in the second oxide as the first transition element is Co. When the second oxide is the oxide (ii) described above, the second oxide contains a plurality of elements as the first transition elements, which are Co and other first transition elements in addition to Co.

The membrane electrode assembly 10 according to Embodiment 1 has the above-described configuration and thus is capable of being applied to a PCFC and suppressing an increase in ohmic resistance. Further, since the membrane electrode assembly 10 according to Embodiment 1 has the above-described embodiment, bonding at the interface between the first electrode 12 and the electrolyte membrane 11 is maintained, and peeling at the interface between the first electrode 12 and the electrolyte membrane 11 can also be suppressed. As described above, the first oxide is, for example, an oxide that can be used as a material of an air electrode of an SOFC. Therefore, the membrane electrode assembly 10 according to Embodiment 1 can maintain bonding at the interface between the first electrode for which an electrode material for an SOFC is used and the electrolyte membrane containing an oxide having proton conductivity, which can be used as the electrolyte material of a PCFC and can suppress an increase in ohmic resistance and peeling.

An oxide containing transition elements and having a perovskite structure, such as the second oxide, is known to exhibit electron conductivity, and among these, particularly an oxide containing Co tends to have high electron conductivity. The effect of improving the electron conductivity is high when the amount of the transition elements to be added is, for example, greater than or equal to 10% by mole and desirably greater than or equal to 20% by mole. Further, the transition elements are used as, for example, a sintering assistant that improves the sinterability of an oxide having a perovskite structure, and in this case, the addition amount thereof is about 5% by mole at most and the effect of increasing the electron conductivity is small.

The second oxide may be the oxide (i) described above, that is, a composite oxide having a perovskite structure and formed of Ba, Zr, Yb, Co, and O.

The first oxide may satisfy any of the following items (1) to (4).
(1) The constituent elements of the A site include La and Sr, and the constituent elements of the B site include Co and Fe.
(2) The constituent elements of the A site include La and Sr, and the constituent elements of the B site include Co.
(3) The constituent elements of the A site include La and Ba, and the constituent elements of the B site include Co.
(4) The constituent elements of the A site include La, and the constituent elements of the B site include Co.

The first oxide that satisfies any one of the above-described items (1) to (4) is a material used as an air electrode material of an SOFC. When the air electrode material for an SOFC as described above is used in combination with the electrolyte membrane used in a PCFC, bonding failure is likely to occur at the interface between the electrode and the electrolyte membrane in a membrane electrode assembly of the related art. On the contrary, since the membrane electrode assembly 10 according to Embodiment 1 is formed such that the first electrode 12 further contains the second oxide, satisfactory bonding properties between the first electrode 12 and the electrolyte membrane 11 can be maintained and an increase in ohmic resistance can also be suppressed even when the air electrode material for an SOFC is used in combination with the electrolyte membrane used in a PCFC.

For example, when the first oxide is an oxide satisfying the item (1) described above (that is, LSCF), the second oxide may be any of the oxide (i) or (ii) described above.

For example, when the first oxide is an oxide satisfying the item (2) described above (that is, LSC), the second oxide may be any of the oxide (i) or (ii) or may be the oxide (i) described above.

For example, when the first oxide is an oxide satisfying the item (3) described above (that is, LBC), the second oxide may be any of the oxide (i) or (ii). For example, when the first oxide is an oxide satisfying the item (4) described above (that is, LC), the second oxide may be any of the oxide (i) or (ii).

The first electrode 12 may also contain other components in addition to the first oxide and the second oxide described above. Examples of the other components include impurities generated in the process of synthesizing the first oxide and the second oxide. The first electrode 12 may contain, for example, BaCO₃, ZrO₂, Yb₂O₃, La₂O₃, Co₃O₄, SrO, or Fe₂O₃ as impurities generated in the process of synthesizing compounds in Examples 1 to 3 described below.

The mixing ratio of the first oxide to the second oxide (first oxide: second oxide) may be in a range of 10:90 to 90: 10 or in a range of 30:70 to 70:30 in terms of the mass ratio.

The electrolyte membrane 11 is, for example, formed of an electrolyte material having proton conductivity (that is, a proton conductor). Examples of the proton conductor include a compound represented by Chemical Formula Baₐ₁Zr₁₋ₓ₁M1ₓ₁O_{3-δ1}, a compound represented by Chemical Formula Baₐ₂Ce₁₋ₓ₂M2ₓ₂O_{3-δ2}, and a compound represented by Chemical Formula Baₐ₃Zr_{1-x3-y3}Ceₓ₃M3_{y3}O_{3-δ3.} Here, M1, M2, and M3 each include at least one selected from the group consisting of Pr, Nd, Pm, Sm, Eu, Gd, Tb, Dy, Ho, Er, Tm, Yb, Y, Sc, In, and Lu, and expressions of 0.95 ≤ a1 ≤ 1.05, 0.95 ≤ a2 ≤ 1.05, 0.95 ≤ a3 ≤ 1.05, 0 < x1 < 1,0 < x2 < 1,0 < x3 < 1,0 < y3 < 1,0 < δ1 < 0.5, 0 < δ2 < 0.5, and 0 < δ3 < 0.5 are satisfied. However, the proton conductor is not limited thereto. The electrolyte membrane 11 of the membrane electrode assembly 10 according to Embodiment 1 contains at least one selected from the group consisting of a compound represented by Chemical Formula Baₐ₁Zr₁₋ₓ₁M1ₓ₁O_{3-δ1}, a compound represented by Chemical Formula Baₐ₂Ce₁₋ₓ₂M2ₓ₂O_{3-δ2}, and a compound represented by Chemical Formula Baₐ₃Zr_{1-x3-y3}Ceₓ₃M3_{y3}O_{3-δ3}.

With the configuration described above, the electrolyte membrane 11 contains a material having excellent proton conductivity, and thus the ohmic resistance of the membrane electrode assembly 10 can be reduced.

In the compound represented by Chemical Formula BaₐZr₁₋ₓ₁M1ₓ₁O_{3-δ1}, M1 may represent Yb.

The thickness of the electrolyte membrane 11 is, for example, in a range of 1 µm to 500 µm and may be in a range of 1 µm to 50 µm.

The first electrode 12 has, for example, a thickness of 1 µm to 1000 µm. The first electrode 12 also serves as a support of a cell, the first electrode 12 may have a thickness of 100 µm to 1000 µm. When the configuration other than the first electrode 12 is a support of a cell, the first electrode 12 may have a thickness of 1 µm to 100 µm or a thickness of 5 µm to 50 µm.

As shown in Fig. 1A, the electrode membrane 11 and the first electrode 12 may be in contact with each other. According to the membrane electrode assembly 10 of Embodiment 1, satisfactory interface bonding can be maintained and the ohmic resistance can be reduced even when the first electrode 12 and the electrolyte membrane 11 are in contact with each other.

The electrolyte membrane 11 and the first electrode 12 may not be in contact with each other. That is, other layers may be provided between the electrolyte membrane 11 and the first electrode 12. Examples of the other layers include a functional layer. The functional layer is a layer that promotes movement of electrons or protons between the electrolyte membrane 11 and the first electrode 12. The functional layer is, for example, formed of a composite of a cermet and a composite oxide.

The electrolyte membrane 11 is, for example, prepared by a tape casting method, a spin coating method, a dip coating method, a sputtering method, or a pulse laser deposition (PLD) method.

### (Embodiment 2)

Fig. 1B is a cross-sectional view showing an electrochemical cell 20 according to Embodiment 2.

The electrochemical cell 20 according to Embodiment 2 includes the membrane electrode assembly 10 and a second electrode 13. That is, the electrochemical cell 20 includes the first electrode 12, the electrolyte membrane 11, and the second electrode 13.

The membrane electrode assembly 10 has been described in Embodiment 1.

As shown in Fig. 1B, the electrochemical cell 20 is formed such that the first electrode 12, the electrolyte membrane 11, and the second electrode 13 are provided in this order. That is, the electrolyte membrane 11 is sandwiched between the first electrode 12 and the second electrode 13. In other words, the electrolyte membrane 11 is provided between the first electrode 12 and the second electrode 13.

The electrochemical cell 20 according to Embodiment 2 has the above-described configuration, and thus the ohmic resistance between the first electrode 12 and the electrolyte membrane 11 can be reduced. Therefore, the electrochemical cell 20 according to Embodiment 2 is capable of realizing high efficiency.

The first electrode 12 of the membrane electrode assembly 10 may be an air electrode as described in Embodiment 1. Therefore, the second electrode 13 may be a fuel electrode. The second electrode 13 contains, for example, a metal oxide when the second electrode functions as a fuel electrode. For example, the second electrode 13 mainly contains nickel oxide. The second electrode 13 can be provided in the membrane electrode assembly 10 by a screen printing method or the like. Further, the second electrode 13 contains, for example, at least one selected from the group consisting of a metal and a metal oxide when the second electrode 13 functions as a fuel electrode. For example, the second electrode 13 contains at least one selected from the group consisting of nickel (that is, Ni) and nickel oxide (that is, NiO). With the configuration described above, the electrochemical cell 20 having excellent fuel electrode performance can be provided.

The second electrode 13 can be provided in the membrane electrode assembly 10 by, for example, a tape casting method, a spin coating method, a dip coating method, a sputtering method, a PLD method, or a screen printing method.

As shown in Fig. 1B, the second electrode 13 and the electrolyte membrane 11 are provided in a state of being in contact with each other, but the configuration thereof is not limited thereto. Other layers may be provided between the second electrode 13 and the electrolyte membrane 11.

Examples of the other layers include a functional layer. The functional layer is described in Embodiment 2.

The electrochemical cell 20 can be used as a fuel cell, an electrochemical hydrogen pump, a hydrogen sensor, and a water electrolysis apparatus.

### (Embodiment 3)

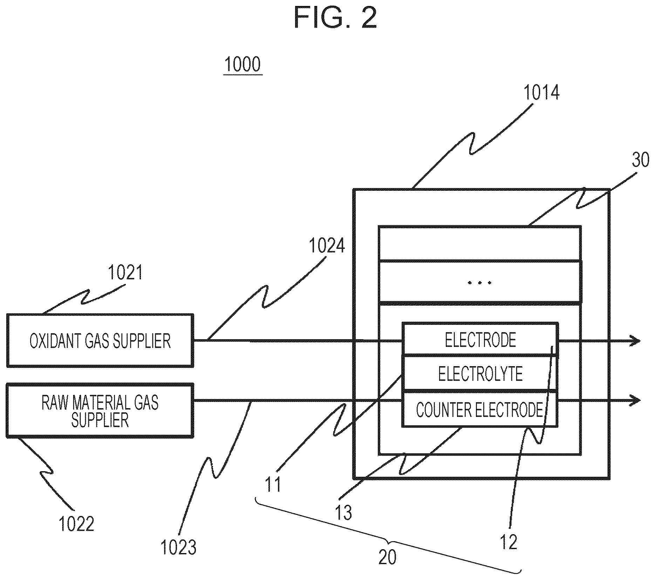

Fig. 2 schematically shows a fuel cell system 1000 according to Embodiment 3.

The fuel cell system 1000 includes the electrochemical cell 20. The electrochemical cell 20 has been described in Embodiment 2.

In the fuel cell system 1000 according to Embodiment 3, the electrochemical cell 20 is used as a fuel cell. Therefore, the first electrode 12 functions as an air electrode and the second electrode 13 functions as a fuel electrode in this case.

The fuel cell system 1000 further includes an oxidant gas supply path 1024 and a raw material gas supply path 1023. The oxidant gas supply path 1024 is connected to the first electrode 12 and an oxidant gas supplier 1021. The raw material gas supply path 1023 is connected to the second electrode 13 and a raw material supplier 1022.

A stack 30 is obtained by laminating the electrochemical cells 20. The obtained stack 30 is stored in a housing 1014.

The housing 1014 may be formed of a heat insulating member. Oxidant gas is supplied to the first electrodes 12 of the laminated electrochemical cells 20.

Specifically, the oxidant gas is supplied from the oxidant gas supplier 1021 to the first electrodes 12 (that is, cathodes) of a plurality of the electrochemical cells 20 through the oxidant gas supply path 1024.

The following reaction (1) proceeds in the first electrode 12.

O₂ + 4H⁺ + 4e⁻ → 2H₂O (1)

The oxidant gas is, for example, air.

The raw material is supplied to the second electrodes 13 of the plurality of electrochemical cells 20 through the raw material gas supply path 1023 from the raw material supplier 1022.

The following reaction (2) proceeds in the second electrode 13.

2H₂ → 4H⁺ + 4e⁻ (2)

The raw material is, for example, hydrogen molecules.

Hydrogen may be generated by a reforming reaction. Alternatively, hydrogen may be generated by water electrolysis.

In this manner, the fuel cell system 1000 operates. Further, the fuel cell system 1000 performs power generation.

The fuel cell system 1000 according to Embodiment 3 includes the electrochemical cell 20 with high efficiency, in which the ohmic resistance between the first electrode 12 and the electrolyte membrane 11 is reduced. Therefore, the fuel cell system 1000 according to Embodiment 3 is capable of realizing high efficiency.

### EXAMPLES

Hereinafter, the present disclosure will be described in more detail with reference to the following examples and comparative examples. As described below, a membrane electrode assembly and an electrochemical cell including the membrane electrode assembly were prepared in each example and each comparative example. In each electrochemical cell, the presence or absence of peeling of the first electrode from the electrolyte membrane and the ohmic resistance between the first electrode and the electrolyte membrane were evaluated.

### [Example 1]

### (Preparation of air electrode)

An air electrode was prepared as the first electrode by the following method.

### 1. Preparation of first oxide

A LaSrCo composite oxide was prepared as the first oxide. The LaSrCo composite oxide (hereinafter, LSC) was synthesized by a citric acid complex method. The following materials were used for synthesis.

· La(NO₃)₃·6H₂O (23.06 g, manufactured by Kanto Chemical Co., Inc.)
· Sr(NO₃)₂ (7.51 g, manufactured by Kanto Chemical Co., Inc.)
· Co(NO₃)₂·6H₂O (25.83 g, manufactured by Kanto Chemical Co., Inc.)
· C₆H₈O₇·H₂O (34.11 g, manufactured by Kanto Chemical Co., Inc.)
· Ethylenediaminetetraacetic acid (25.94 g, manufactured by Kanto Chemical Co., Inc.)
· Ammonia water (28%, manufactured by Kanto Chemical Co., Inc.)

The above-described materials were added to a beaker containing 500 mL of distilled water and stirred to obtain a solution. Thereafter, the solution was heated to 90°C while being stirred. Next, ammonia water (28%) was added to the solution to adjust the pH thereof to 7. After the pH adjustment, the solution was heated from 95°C to 240°C so that the solvent was removed, thereby obtaining a solid material. The obtained solid material was heat-treated at 600°C for 2 hours and degreased to obtain powder. The degreased powder was heat-treated at 900°C for 2 hours. In this manner, powder of La_{0.6}Sr_{0.4}CoO_{3-δ} was obtained. 10 g of the obtained powder was weighed and mixed and pulverized with 20 mL of butyl acetate (manufactured by Kanto Chemical Co., Inc.) and 100 g of zirconia balls (ϕ2mm) in a planetary ball mill (manufactured by Fritsch Japan Co., Ltd.). The mixture was pulverized under conditions of 350 rpm for 2 hours. The solution after the pulverization was recovered and dried. In this manner, powder of the first oxide after micronization was obtained. The particle size distribution of the obtained powder after micronization was measured with a particle size distribution measuring device (product name: MT3300EXII, manufactured by MicrotracBEL Corp.). The median diameter D50 value of the powder after micronization was about 0.3 µm. The median diameter D50 denotes the particle diameter when the cumulative volume in the volume-based particle size distribution is equal to 50%. In this manner, powder of LSC, which is the first oxide, was obtained. The composition of the obtained LSC was La_{0.6}Sr_{0.4}CoO_{3-δ}. Further, the crystal structure of the obtained first oxide was analyzed with an X-ray diffractometer "Smartlab" (manufactured by Rigaku Corporation). Specifically, CuKα rays were used as an X-ray source, and the obtained first oxide was irradiated with X-rays by a parallel beam method. It was determined that the first oxide obtained in the present example had a perovskite structure by collating the obtained peak shape with the inorganic crystal structure database (ICSD). Here, ICSD data for collation, used to analyze the crystal structure of the first oxide in Example 1 was ICSD86943 (La_{0.6}Sr_{0.4}CoO_{3-δ}).

### 2. Preparation of second oxide

The second oxide was synthesized by a complex polymerization method. First, each solution was prepared during the synthesis. Electrode materials were synthesized using each of the prepared solutions.

### (1) Preparation of each solution

### (a) Zr solution

A Zr solution was prepared by using the following material.
· ZrO(NO₃)₂·2H₂O (240 g, manufactured by Kanto Chemical Co., Inc.)

The above-described material was added to a polyethylene container containing 1800 mL of distilled water. Next, the distilled water to which the above-described material was added was sufficiently stirred. In this manner, a Zr solution was obtained. The concentration of Zr ions in the solution was calculated by inductively coupled plasma atomic emission spectrophotometry (hereinafter, ICP-AES). As an analyzer for ICP-AES, "iCAP7400 Duo" (manufactured by Thermo Fisher Scientific Inc.) was used. As a result of analysis, the concentration of Zr in the Zr solution was 0.49 mol/L.

### (b) Yb solution

An Yb solution was prepared by using the following materials.
· Yb(NO₃)₃·5H₂O (300 g, manufactured by Kojundo Chemical Lab. Co., Ltd.)
· C₆H₈O₇·H₂O (300 g, manufactured by Kanto Chemical Co., Inc.)

The above-described materials were added to a polyethylene container containing 500 mL of distilled water. Next, the distilled water to which the above-described materials were added was sufficiently stirred. In this manner, an Yb solution was obtained. The concentration of Yb ions in the solution was calculated by ICP-AES which was the same method as that for the calculation of the concentration of Zr ions in the Zr solution in the section of (a) described above. As a result, the concentration of Yb in the Yb solution was 0.91 mol/L. Further, the concentration of citric acid (that is, C₆H₈O₇) in the solution was 2.84 mol/L which was calculated based on the ratio between the charged amount of C₆H₈O₇·H₂O and the charged amount of distilled water.

### (c) Co solution

A Co solution was prepared by using the following materials.
· Co(NO₃)₂·6H₂O (300 g, manufactured by Kanto Chemical Co., Inc.)
· C₆H₈O₇·H₂O (300 g, manufactured by Kanto Chemical Co., Inc.)

The above-described materials were added to a polyethylene container containing 500 mL of distilled water. Next, the distilled water to which the above-described materials were added was sufficiently stirred. In this manner, a Co solution was obtained. The concentration of Co ions in the solution was calculated by ICP-AES which was the same method as that for the calculation of the concentration of Zr ions in the Zr solution in the section of (a) described above. As a result, the concentration of Co in the Co solution was 1.20 mol/L. Further, the concentration of citric acid (that is, C₆H₈O₇) in the solution was 2.84 mol/L which was calculated based on the ratio between the charged amount of C₆H₈O₇·H₂O and the charged amount of distilled water.

### (d) Citric acid solution

A citric acid solution was prepared by using the following materials.
· C₆H₈O₇·H₂O (1200 g, manufactured by Kanto Chemical Co., Inc.)

The above-described material was added to a polyethylene container containing 2000 mL of distilled water. Next, the distilled water to which the above-described material was added was sufficiently stirred. In this manner, a citric acid solution was obtained. The concentration of citric acid (that is, C₆H₈O₇) in the solution was 2.84 mol/L which was calculated based on the ratio between the charged amount of C₆H₈O₇·H₂O and the charged amount of distilled water.

### (2) Synthesis of second oxide

A BaZrYbCo composite oxide (hereinafter, BZYbCo) serving as the second oxide in Example 1 was synthesized using each solution prepared by the above-described method. The following materials and solutions were used for synthesizing the second oxide of Example 1.
· BaCO₃ (0.05 mol, manufactured by Kanto Chemical Co., Inc.)
· C₆H₈O₇·H₂O (0.227 mol, manufactured by Kanto Chemical Co., Inc.)
· Zr solution (38.3 mL; Zr amount = 0.0188 mol)
· Yb solution (6.9 mL; Yb amount = 0.0063 mol, citric acid amount = 0.020 mol)
· Co solution (20.8 mL; Co amount = 0.025 mol, citric acid amount = 0.059 mol)
· Citric acid solution (68.5 mL; citric acid amount = 0.194 mol)
· Ethylene glycol (2 mol)

First, a citric acid monohydrate (that is, C₆H₈O₇·H₂O) was added to a 1 L beaker. Next, 80 mL of distilled water was added to the 1 L beaker, and the solution was stirred with a stirrer. In this manner, a colorless transparent first aqueous solution was obtained. BaCO₃ was added to the obtained colorless transparent first aqueous solution. Further, BaCO₃ was completely dissolved in the solution by further stirring the solution. In this manner, a colorless transparent second aqueous solution was obtained. The above-described amounts of the Zr solution, the Yb solution, the Co solution, and the citric acid solution were added to the obtained colorless transparent second aqueous solution using a pipetter while the obtained colorless transparent second aqueous solution was continuously stirred. Further, ethylene glycol was also added to the obtained colorless transparent second aqueous solution. In this manner, a mixed solution was obtained.

The obtained mixed solution was continuously stirred with a stirrer. The obtained mixed solution was heated to about 90°C using a mantle heater. In this manner, the moisture was evaporated from the obtained mixed solution. Further, the mixed solution was heated to about 130°C to evaporate and remove ethylene glycol, and thus the polymerization was accelerated and the solution was concentrated. The heating of the mixed solution was stopped when the solution amount was decreased to 100 mL. In this manner, a concentrate was obtained. The obtained concentrate was transferred to an alumina crucible and naturally cooled. Next, the concentrate was heated in a dryer at 120°C for 6 hours. In this manner, ethylene glycol was removed from the concentrate. Thereafter, the alumina crucible containing the concentrate from which ethylene glycol had been removed was calcined at 500°C for 3 hours. In this manner, organic components were removed. As a result, a solid material was obtained. Thereafter, the obtained solid material was crushed in a mortar to obtain calcined powder. Next, the calcined powder was added to the alumina crucible and heat-treated at 1100°C for 2 hours in an air atmosphere. The obtained solid material was crushed in a mortar. In this manner, BZYbCo powder serving as the second oxide was obtained. The composition of the obtained BZYbCo was BaZr_{0.375}Yb_{0.125}Co_{0.500}O_{3-δ}.

10 g of the obtained powder was weighed and mixed and pulverized with 20 mL of butyl acetate (manufactured by Kanto Chemical Co., Inc.) and 100 g of zirconia balls (ϕ2mm) in a planetary ball mill (manufactured by Fritsch Japan Co., Ltd.). The mixture was pulverized under conditions of 350 rpm for 2 hours. The solution after the pulverization was recovered and dried. In this manner, powder of the second oxide after micronization was obtained. The particle size distribution of the obtained powder after micronization was measured with a particle size distribution measuring device (product name: MT3300EXII, manufactured by MicrotracBEL Corp.). The median diameter D50 value of the powder after micronization was about 0.3 µm. In this manner, powder of the second oxide was obtained. Further, the crystal structure of the obtained second oxide was analyzed by the same method as that for the analysis of the crystal structure of the first oxide. It was determined that the second oxide obtained in the present example had a perovskite structure. Here, ICSD data for collation, used to analyze the crystal structure of the second oxide in Example 1 was ICSD157138 (BaZr_{0.92}Yb_{0.08}O_{3-δ}).

### 3. Preparation of air electrode

5.00 g of the first oxide and 5.00 g of the second oxide were respectively weighed and mixed with each other in a mortar, thereby obtaining powder of a composite oxide at a mass ratio of 50:50. In this manner, a first electrode was obtained.

### (Preparation of half cell of fuel electrode and electrolyte membrane)

Next, a method of preparing a half cell of a fuel electrode and an electrolyte membrane will be described.

First, a method of producing a BZYb green sheet material serving as the electrolyte membrane 11 will be described. Further, in the examples of the present disclosure, Ni and BZYb were weighed such that the volume ratio thereof reached 69:31 (NiO:BZYb = 80:20 in terms of the mass ratio).

Here, BZYb serving as a proton conductor material constituting the electrolyte membrane 11 and a part of a mixture of the second electrode 13 was prepared as a starting material using a citric acid complex method by adding powder of Yb(NO₃)₃·xH₂O (manufactured by Kojundo Chemical Lab Co., Ltd.) to powder of Ba(NO₃)₂ (manufactured by Kanto Chemical Co., Inc.) and ZrO(NO₃)₂·2H₂O (manufactured by Kanto Chemical Co., Inc.). Specifically, first, a mixture of each powder weighed in a predetermined proportion was dissolved in distilled water, and the obtained aqueous solution was stirred. Further, 1.5 equivalents of a citric acid monohydrate (manufactured by Kanto Chemical Co., Inc.) and 1.5 equivalents of ethylenediaminetetraacetic acid (EDTA) (manufactured by Kanto Chemical Co., Inc.) with respect to the metal cation contained in the aqueous solution were added to the aqueous solution. Thereafter, the aqueous solution was stirred at 90°C. Next, the pH of the aqueous solution was adjusted to 7 using ammonia water (28%) (manufactured by Kanto Chemical Co., Inc.). After the pH adjustment, the solution was heated from 95°C to 240°C to remove the solvent using a hot stirrer, thereby obtaining a solid material. The obtained solid material was pulverized in a mortar and degreased at about 400°C. After the degreasing, the obtained powder was press-molded into a cylindrical shape and calcined at 900°C for 10 hours. After the calcination, the coarsely pulverized powder was added to a plastic container together with zirconia balls, ethanol was further added thereto, and the mixture was pulverized in a ball mill for 4 days or longer. After the pulverization using a ball mill, the mixture was dried with a lamp to remove the solvent. In this manner, BaZr_{0.8}Yb_{0.2}O_{3-δ} (BZYb) electrolyte material powder was obtained. The obtained BaZr_{0.8}Yb_{0.2}O_{3-δ} (BZYb) electrolyte material powder was kneaded with polyvinyl butyral as a resin, butyl benzyl phthalate as a plasticizer, and butyl acetate and 1-butanol as a solvent, thereby obtaining a green sheet of the electrolyte membrane using a tape casting method.

Next, a method of producing a fuel electrode serving as the second electrode 13 in Example 1 will be described. The obtained BaZr_{0.8}Yb_{0.2}O_{3-δ} (BZYb) electrolyte material powder and NiO powder (manufactured by Sumitomo Metal Mining Co., Ltd.) were weighed such that the mass ratio of NiO to BZYb was set to 80:20 (the volume ratio of Ni to BZYb was 69:31). The electrolyte material powder, the NiO powder, polyvinyl butyral as a resin, butyl benzyl phthalate as a plasticizer, and butyl acetate and 1-butanol as a solvent were kneaded, thereby obtaining a green sheet of the fuel electrode using a tape casting method.

Next, a method of producing a laminate of the second electrode 13 and the electrolyte membrane 11 in Example 1 will be described. The green sheet of the electrolyte membrane obtained above and the green sheet of the fuel electrode obtained above were laminated and hot-pressed at 50 MPa, thereby obtaining a laminate. The laminate was cut with a laser to have a diameter of 25 mmϕ, the obtained laminate was heat-treated at 1475°C for 2 hours to prepare a half cell of the fuel electrode and the electrolyte membrane. Further, the size of the heat-treated half cell was about 20 mmϕ, the thickness of the electrolyte was about 13 µm, and the thickness of the fuel electrode was about 600 µm.

### (Preparation of electrochemical cell for evaluation)

5 g of the first electrode obtained above and 3.33 g of EC vehicle (manufactured by Nisshin Kasei Co., Ltd.) were weighed into a plastic container. Further, the mixture was stirred at 1000 rpm for 5 minutes using a rotating and revolving mixer. In this manner, a paste precursor was obtained. The obtained paste precursor was dispersed using a three roll mill (trade name: BR-100VIII, manufactured by IMEX Co., Ltd.). In this manner, a dispersion liquid of the first electrode was obtained.

The obtained dispersion liquid of the first electrode was printed using a screen printing method on the center of the main surface of the electrolyte membrane in the half cell of the fuel electrode and the electrolyte membrane prepared by the above-described method. Thereafter, the dispersion liquid of the first electrode was heat-treated in air under conditions of 900°C for 2 hours. The prepared first electrode was circular and had a diameter of 10 mm. In this manner, an electrochemical cell for evaluation was prepared.

### (Confirmation on presence or absence of electrode peeling)

The presence or absence of electrode peeling, that is, peeling of the first electrode from the electrolyte membrane was confirmed using the electrochemical cell for evaluation. The presence or absence of electrode peeling in the electrochemical cell for evaluation was confirmed by a tape peeling test by pressing Kapton tape against the surface of the first electrode. It was determined that peeling was found in a case where the first electrode adhered to the Kapton side, that is, the first electrode was peeled from the electrolyte membrane, and it was determined that peeling was not found in a case where adhesion of the first electrode to Kapton tape was not visually confirmed. In Example 1, peeling of the first electrode was not observed.

### (Measurement of ohmic resistance)

The following method was used to measure the ohmic resistance using the electrochemical cell for evaluation. Further, as the electrochemical cell for measuring the ohmic resistance, a sample of a cell prepared by the same process was used separately from the electrode peeling test described above.

Silver ink (manufactured by Nexceris) was printed on the electrodes of the both surfaces of the electrochemical cell for evaluation using a screen printing method. Further, the printed silver ink had a diameter of 10 mm. The electrochemical cell for evaluation was dried. Thereafter, the electrochemical cell was held by an alumina cell evaluation holder (manufactured by Chino Corporation). The first electrode, the second electrode, and foamed silver (manufactured by Magnex Co., Ltd., thickness of 0.6 mm, diameter of 12 mmϕ) serving as a current collecting member were sandwiched between the cell evaluation holder and the cell. Further, similarly, THERMICULITE #866 (manufactured by Flexitallic, thickness of 0.5 mm, outer diameter of 20 mmϕ, inner diameter of 14 mmϕ) as a gas sealing material was sandwiched between the cell evaluation holder and the cell. The cell evaluation holder holding the electrochemical cell for evaluation was allowed to stand in an electric furnace, and the air supply path and the fuel supply path were respectively connected to the cell.

Air (flow rate: 100 mL/min) humidified at a dew point of 20°C was supplied to the first electrode serving as the air electrode of the electrochemical cell for evaluation and nitrogen (flow rate: 100 mL/min) humidified at a dew point of 20°C was supplied to the second electrode serving as the fuel electrode, the temperature thereof was increased to 700°C, and reduction was performed by switching the gas supplied to the fuel electrode with hydrogen (flow rate: 100 mL/min) humidified at a dew point of 20°C. This state was maintained for 2 hours, the electrochemical cell for evaluation was cooled to 600°C, and the ohmic resistance of the electrochemical cell for evaluation was measured based on the alternating current impedance method after the temperature was stabilized.

Specifically, an alternating current signal was applied to the cell in a range of 100 kHz to 0.1 Hz with an amplitude of 10 mV using ModuLab XM ECS (manufactured by Solartron Analytical). In regard to the arc drawn in a frequency range of about 100 kHz to 0.01 Hz in the Nyquist plot, the intersection between the arc and the real axis on a high frequency side was calculated as the ohmic resistance. The ohmic resistance is the sum of the ohmic resistances of each element of the electrochemical cell, but since the second electrode and the electrolyte membrane were prepared under the same conditions, the superiority or inferiority of the ohmic resistance due to the first electrode or the interface between the first electrode and the electrolyte membrane was determined based on the magnitude of the ohmic resistance. Further, the measurement was performed in a state where an external current was not applied, that is, an open circuit state.

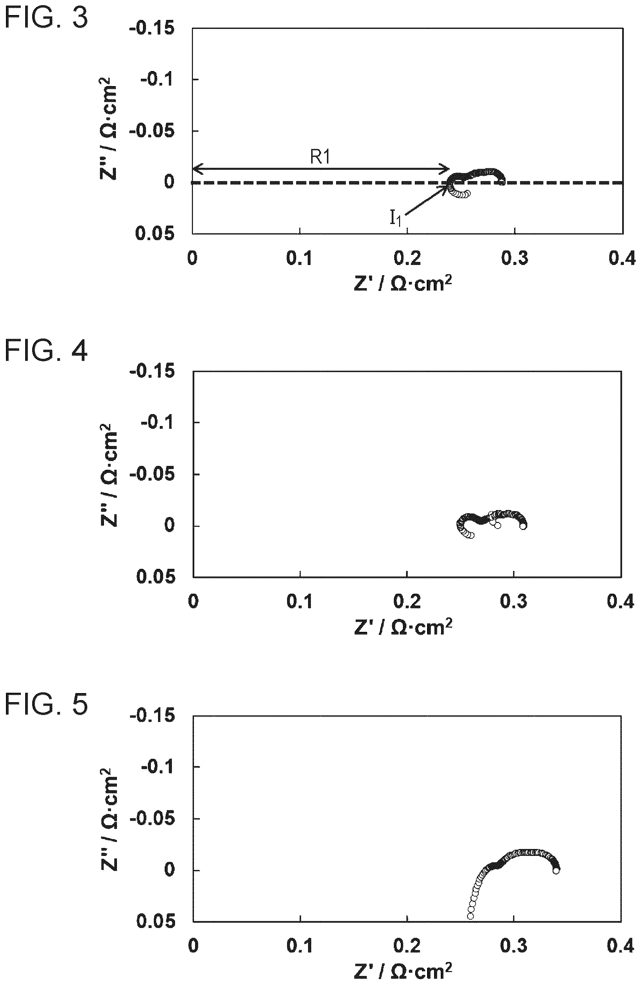

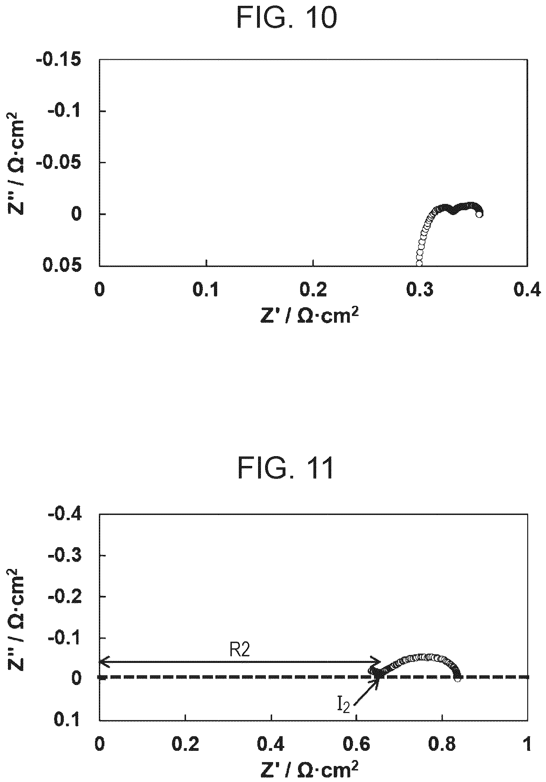

Further, as a specific method of evaluating the ohmic resistance, the following method can be referred to.
(i) When in an arc drawn in a frequency range of 100 kHz to 0.01 Hz in the Nyquist plot, an intersection (for example, I1 shown in Fig. 3) of the arc and the real axis on the high frequency side was observed, a difference (for example, R1 shown in Fig. 3) between the origin and the intersection of the arc and the real axis on the high frequency side was defined as the ohmic resistance.
(ii) When in an arc drawn in a frequency range of 100 kHz to 0.01 Hz in the Nyquist plot, an intersection of the arc and the real axis on the high frequency side was not observed, a difference (for example, R2 in Fig. 11) between the origin and the value of the real axis in the minimum point (for example, I2 in Fig. 11) of the arc was defined as the ohmic resistance.

Fig. 3 shows the Nyquist plot measured using the electrochemical cell in Example 1. The ohmic resistance was 0.24 Ωcm².

### [Example 2]

### (Preparation of air electrode)

### 1. Preparation of first oxide

A LaSrCoFe composite oxide (hereinafter, LSCF) serving as the first oxide was synthesized by the citric acid complex method. The following materials were used for the synthesis.

· La(NO₃)₃·6H₂O (23.32 g, manufactured by Kanto Chemical Co., Inc.)
· Sr(NO₃)₂ (7.60 g, manufactured by Kanto Chemical Co., Inc.)
· Co(NO₃)₂·6H₂O (5.22 g, manufactured by Kanto Chemical Co., Inc.)
· Fe(NO₃)₃·9H₂O (29.00 g, manufactured by Kanto Chemical Co., Inc.)
· C₆H₈O₇·H₂O (34.49 g, manufactured by Kanto Chemical Co., Inc.)
· Ethylenediaminetetraacetic acid (26.23 g, manufactured by Kanto Chemical Co., Inc.)
· Ammonia water (28%, manufactured by Kanto Chemical Co., Inc.)

The subsequent synthesis procedures were the same as in Example 1. In this manner, powder of LSCF serving as the first oxide was obtained. The composition of the obtained LSCF powder was La_{0.6}Sr_{0.4}Co_{0.2}Fe_{0.8}O_{3-δ}. Further, the crystal structure of the obtained first oxide was analyzed by the same method as in Example 1. The first oxide obtained in Example 2 had a perovskite structure. Here, ICSD data for collation, used to analyze the crystal structure of the first oxide in Example 2 was ICSD158799 (La_{0.4}Sr_{0.6}Co_{0.2}Fe_{0.8}O_{3-δ}).

### 2. Preparation of second oxide

The preparation was performed in the same manner as in Example 1.

### 3. Preparation of air electrode

The preparation was performed in the same manner as in Example 1.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Example 2.

### (Measurement of ohmic resistance)

The measurement was performed in the same manner as in Example 1. Fig. 4 shows the Nyquist plot measured using the electrochemical cell in Example 2. The ohmic resistance was 0.25 Ωcm².

### [Example 3]

### (Preparation of air electrode)

### 1. Preparation of first oxide

A LaBaCo composite oxide (hereinafter, LBC) serving as the first oxide was synthesized by the citric acid complex method. The following materials were used for the synthesis.

· La(NO₃)₃·6H₂O (27.31 g, manufactured by Kanto Chemical Co., Inc.)
· Ba(NO₃)₂ (10.99 g, manufactured by Kanto Chemical Co., Inc.)
· Co(NO₃)₂·6H₂O (30.59 g, manufactured by Kanto Chemical Co., Inc.)
· C₆H₈O₇·H₂O (40.39 g, manufactured by Kanto Chemical Co., Inc.)
· Ethylenediaminetetraacetic acid (30.72 g, manufactured by Kanto Chemical Co., Inc.)
· Ammonia water (28%, manufactured by Kanto Chemical Co., Inc.)

The subsequent synthesis procedures were the same as in Example 1. In this manner, powder of LBC serving as the first oxide was obtained. The composition of the obtained LBC powder was La_{0.6}Ba_{0.4}CoO_{3-δ}. Further, the crystal structure of the obtained first oxide was analyzed by the same method as in Example 1. The first oxide obtained in Example 3 had a perovskite structure. Here, ICSD data for collation, used to analyze the crystal structure of the first oxide in Example 3 was ICSD157906 (La_{0.6}Ba_{0.4}CoO_{3-δ}).

### 2. Preparation of second oxide

The preparation was performed in the same manner as in Example 1.

### 3. Preparation of air electrode

The preparation was performed in the same manner as in Example 1.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Example 3.

### (Measurement of ohmic resistance)

The measurement was performed in the same manner as in Example 1. Fig. 5 shows the Nyquist plot measured using the electrochemical cell in Example 3. The ohmic resistance was 0.27 Ωcm².

### [Example 4]

### (Preparation of air electrode)

### 1. Preparation of first oxide

A LaCo composite oxide (hereinafter, LC) serving as the first oxide was synthesized by the citric acid complex method. The following materials were used for the synthesis.
· La(NO₃)₃·6H₂O (45.52 g, manufactured by Kanto Chemical Co., Inc.)
· Co(NO₃)₂·6H₂O (30.59 g, manufactured by Kanto Chemical Co., Inc.)
· C₆H₈O₇·H₂O (40.39 g, manufactured by Kanto Chemical Co., Inc.)
· Ethylenediaminetetraacetic acid (30.72 g, manufactured by Kanto Chemical Co., Inc.)
· Ammonia water (28%, manufactured by Kanto Chemical Co., Inc.)

The subsequent synthesis procedures were the same as in Example 1. In this manner, powder of LC serving as the first oxide was obtained. The composition of the obtained LC powder was LaCoO₃. Further, the crystal structure of the obtained first oxide was analyzed by the same method as in Example 1. The first oxide obtained in Example 4 had a perovskite structure. Here, ICSD data for collation, used to analyze the crystal structure of the first oxide in Example 4 was ICSD201761 (LaCoO₃).

### 2. Preparation of second oxide

The preparation was performed in the same manner as in Example 1.

### 3. Preparation of air electrode

The preparation was performed in the same manner as in Example 1.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Example 4.

### (Measurement of ohmic resistance)

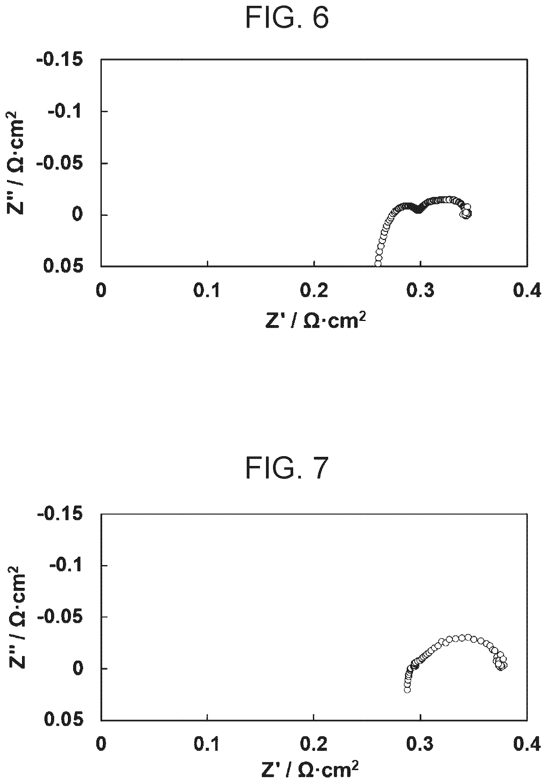

The measurement was performed in the same manner as in Example 1. Fig. 6 shows the Nyquist plot measured using the electrochemical cell in Example 4. The ohmic resistance was 0.27 Ωcm².

### [Comparative Example 1]

### (Preparation of air electrode)

### 1. Preparation of first oxide

LSC serving as the first oxide was synthesized by the same method as in Example 1.

### 2. Preparation of second oxide

Since the second oxide was not used in Comparative Example 1, the present step was omitted.

### 3. Preparation of air electrode

Since the second oxide was not used in Comparative Example 1, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 1.

### (Measurement of ohmic resistance)

The measurement was performed in the same manner as in Example 1. Fig. 7 shows the Nyquist plot measured using the electrochemical cell in Comparative Example 1. The ohmic resistance was 0.29 Ωcm².

### [Comparative Example 2]

### (Preparation of air electrode)

### 1. Preparation of first oxide

LSCF serving as the first oxide was synthesized by the same method as in Example 2.

### 2. Preparation of second oxide

Since the second oxide was not used in Comparative Example 2, the present step was omitted.

### 3. Preparation of air electrode

Since the second oxide was not used in Comparative Example 2, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 2.

### (Measurement of ohmic resistance)

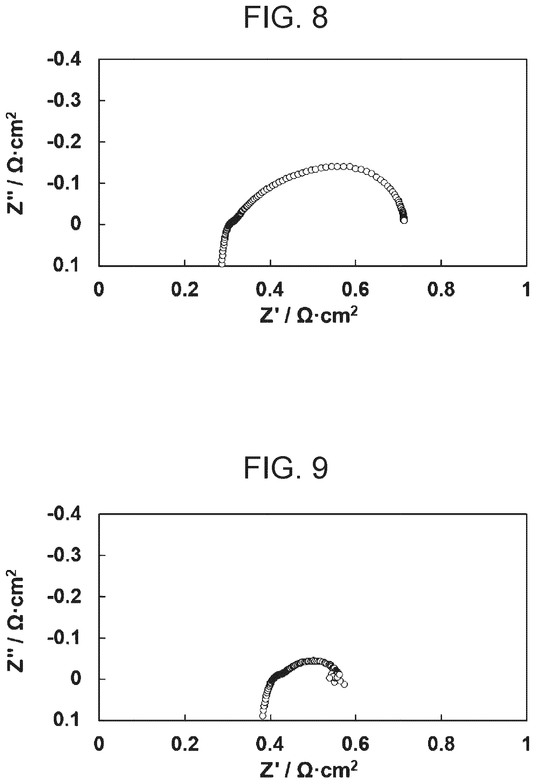

The measurement was performed in the same manner as in Example 1. Fig. 8 shows the Nyquist plot measured using the electrochemical cell in Comparative Example 2. The ohmic resistance was 0.31 Ωcm².

### [Comparative Example 3]

### (Preparation of air electrode)

### 1. Preparation of first oxide

LBC serving as the first oxide was synthesized by the same method as in Example 3.

### 2. Preparation of second oxide

Since the second oxide was not used in Comparative Example 3, the present step was omitted.

### 3. Preparation of air electrode

Since the second oxide was not used in Comparative Example 3, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was partially confirmed in Comparative Example 3.

### (Measurement of ohmic resistance)

The measurement was performed in the same manner as in Example 1. Fig. 9 shows the Nyquist plot measured using the electrochemical cell in Comparative Example

### 3. The ohmic resistance was 0.41 Ωcm².

### [Comparative Example 4]

### (Preparation of air electrode)

### 1. Preparation of first oxide

Since the first oxide was not used in Comparative Example 4, the present step was omitted.

### 2. Preparation of second oxide

The preparation was performed in the same manner as in Example 1.

### 3. Preparation of air electrode

Since the first oxide was not used in Comparative Example 4, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 4.

### (Measurement of ohmic resistance)

The measurement was performed in the same manner as in Example 1. Fig. 10 shows the Nyquist plot measured using the electrochemical cell in Comparative Example 4. The ohmic resistance was 0.31 Ωcm².

### [Comparative Example 5]

### (Preparation of air electrode)

### 1. Preparation of first oxide

The preparation was performed in the same manner as in Example 2.

### 2. Preparation of second oxide

A precursor solution adjusted in advance was used for the synthesis. The same solutions as in the sections of (a), (b), and (c) of Example 1 were used as the Ba solution, the Zr solution, and the Yb solution. Further, an Fe solution adjusted by the following method was used.

### (e) Fe solution

The Fe solution was prepared by using the following materials.

· Fe(NO₃)₃·9H₂O (300 g, manufactured by Kanto Chemical Co., Inc.)
· C₆H₈O₇·H₂O (300 g, manufactured by Kanto Chemical Co., Inc.)

The above-described materials were added to a polyethylene container containing 500 mL of distilled water. Next, the distilled water to which the above-described materials were added was sufficiently stirred. In this manner, an Fe solution was obtained. The concentration of Fe ions in the solution was calculated by ICP-AES which was the same method as that for the calculation of the concentration of Zr ions in the Zr solution described above. As a result, the concentration of Fe in the Fe solution was 0.88 mol/L. Further, the concentration of citric acid (that is, C₆H₈O₇) in the solution was 2.84 mol/L which was calculated based on the ratio between the charged amount of C₆H₈O₇·H₂O and the charged amount of distilled water.

A BaZrYbFe composite oxide (hereinafter, BZYbFe) serving as the second oxide in Comparative Example 5 was synthesized using the following materials and solution.

· BaCO₃ (0.05 mol, manufactured by Kanto Chemical Co., Inc.)
· C₆H₈O₇·H₂O (0.227 mol, manufactured by Kanto Chemical Co., Inc.)
· Zr solution (38.3 mL; Zr amount = 0.0188 mol)
· Yb solution (6.87 mL; Yb amount = 0.0063 mol, citric acid amount = 0.020 mol)
· Fe solution (28.4 mL; Fe amount = 0.025 mol, citric acid amount = 0.081 mol)
· Citric acid solution (60.9 mL; citric acid amount = 0.173 mol)
· Ethylene glycol (2 mol)

First, a citric acid monohydrate (that is, C₆H₈O₇·H₂O) was added to a 1 L beaker. Next, 80 mL of distilled water was added to the 1 L beaker, and the solution was stirred with a stirrer. In this manner, a colorless transparent first aqueous solution was obtained. BaCO3 was added to the obtained colorless transparent first aqueous solution. Further, BaCO₃ was completely dissolved in the solution by further stirring the solution. In this manner, a colorless transparent second aqueous solution was obtained. The above-described amounts of the Zr solution, the Yb solution, the Fe solution, and the citric acid solution were added to the obtained colorless transparent second aqueous solution using a pipetter while the obtained colorless transparent second aqueous solution was continuously stirred. Further, ethylene glycol was also added to the obtained colorless transparent second aqueous solution. In this manner, a mixed solution was obtained.

The subsequent synthesis procedures were the same as in Example 1. In this manner, powder of BZYbFe serving as the second oxide was obtained. The composition of the obtained BZYbFe powder was BaZr_{0.375}Yb_{0.125}Fe_{0.500}O_{3-δ}. Further, the crystal structure of the obtained second oxide was analyzed by the same method as in Example 1. The second oxide obtained in Comparative Example 5 had a perovskite structure. Here, ICSD data for collation, used to analyze the crystal structure of the second oxide in Comparative Example 5 was ICSD157138(BaZr_{0.92}Yb_{0.08}O_{3-δ}).

### 3. Preparation of air electrode

The preparation was performed in the same manner as in Example 1.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 5.

### (Measurement of ohmic resistance)

The measurement was performed in the same manner as in Example 1. Fig. 11 shows the Nyquist plot measured using the electrochemical cell in Comparative Example 5. The ohmic resistance was 0.66 Ωcm².

### [Comparative Example 6]

### (Preparation of air electrode)

### 1. Preparation of first oxide

Since the first oxide was not used in Comparative Example 6, the present step was omitted.

### 2. Preparation of second oxide

The preparation was performed in the same manner as in Comparative Example 5.

### 3. Preparation of air electrode

Since the first oxide was not used in Comparative Example 6, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 6.

### (Measurement of ohmic resistance)

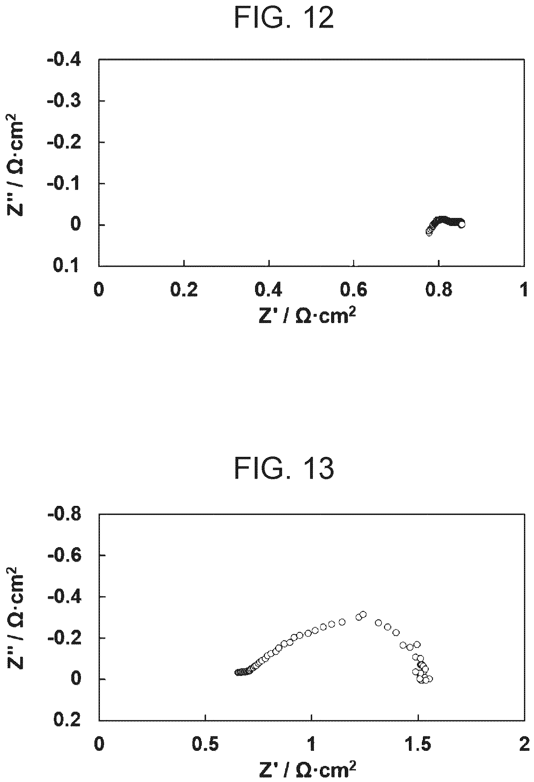

The measurement was performed in the same manner as in Example 1. Fig. 12 shows the Nyquist plot measured using the electrochemical cell in Comparative Example 6. The ohmic resistance was 0.79 Ωcm².

### [Comparative Example 7]

### (Preparation of air electrode)

### 1. Preparation of first oxide

The preparation was performed in the same manner as in Example 2.

### 2. Preparation of second oxide

The BaZr_{0.8}Yb_{0.2}O_{3-δ} (BZYb) electrolyte material powder in Example 1 was used. Further, the crystal structure of the BaZr_{0.8}Yb_{0.2}O_{3-δ} (BZYb) electrolyte material powder used as the second oxide was analyzed by the same method as in Example 1. The second oxide in Comparative Example 7 had a perovskite structure. Here, ICSD data for collation, used to analyze the crystal structure of the second oxide in Comparative Example 7 was ICSD157138(BaZr_{0.92}Yb_{0.08}O_{3-δ}).

### 3. Preparation of air electrode

The preparation was performed in the same manner as in Example 1.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 7.

### (Measurement of ohmic resistance)

The measurement was performed in the same manner as in Example 1. Fig. 13 shows the Nyquist plot measured using the electrochemical cell in Comparative Example 7. The ohmic resistance was 0.62 Qcm2.

### [Comparative Example 8]

### (Preparation of air electrode)

### 1. Preparation of first oxide

The preparation was performed in the same manner as in Example 1.

### 2. Preparation of second oxide

A precursor solution adjusted in advance was used for the synthesis. The same solutions as in the sections of (a), (b), (c), and (d) of Example 1 were used as the Ba solution, the Zr solution, the Yb solution, and the Co solution. Further, a Ce solution adjusted by the following method was used.

### (f) Ce solution

The Ce solution was prepared by using the following materials.

· Ce(NO₃)₃·6H₂O (300 g, manufactured by Kanto Chemical Co., Inc.)
· C₆H₈O₇·H₂O (300 g, manufactured by Kanto Chemical Co., Inc.)

The above-described materials were added to a polyethylene container containing 500 mL of distilled water. Next, the distilled water to which the above-described materials were added was sufficiently stirred. In this manner, a Ce solution was obtained. The concentration of Ce ions in the solution was calculated by ICP-AES which was the same method as that for the calculation of the concentration of Zr ions in the Zr solution in the section of (a) described above. As a result, the concentration of Ce in the Ce solution was 0.88 mol/L. Further, the concentration of citric acid (that is, C₆H₈O₇) in the solution was 2.84 mol/L which was calculated based on the ratio between the charged amount of C₆H₈O₇·H₂O and the charged amount of distilled water.

A BaCeZrYbCo composite oxide (hereinafter, BCeZYbCo) serving as the second oxide in Comparative Example 8 was synthesized using each solution prepared by the above-described method. BCeZYbCo in Comparative Example 8 was synthesized by using the following materials and solutions.
· BaCO₃ (0.05 mol, manufactured by Kanto Chemical Co., Inc.)
· C₆H₈O₇·H₂O (0.227 mol, manufactured by Kanto Chemical Co., Inc.)
· Zr solution (17.4 mL; Zr amount = 0.0085 mol)
· Yb solution (6.9 mL; Yb amount = 0.0063 mol, citric acid amount = 0.020 mol)
· Co solution (20.8 mL; Co amount = 0.025 mol, citric acid amount = 0.059 mol)
· Ce solution (11.7 mL; Ce amount = 0.010 mol, citric acid amount = 0.033 mol)
· Citric acid solution (56.8 mL; citric acid amount = 0.16 mol)
· Ethylene glycol (2 mol)

First, a citric acid monohydrate (that is, C₆H₈O₇·H₂O) was added to a 1 L beaker. Next, 80 mL of distilled water was added to the 1 L beaker, and the solution was stirred with a stirrer. In this manner, a colorless transparent first aqueous solution was obtained. BaCO₃ was added to the obtained colorless transparent first aqueous solution. Further, BaCO₃ was completely dissolved in the solution by further stirring the solution. In this manner, a colorless transparent second aqueous solution was obtained. The above-described amounts of the Zr solution, the Yb solution, the Co solution, the Ce solution, and the citric acid solution were added to the obtained colorless transparent second aqueous solution using a pipetter while the obtained colorless transparent second aqueous solution was continuously stirred. Further, ethylene glycol was also added to the obtained colorless transparent second aqueous solution. In this manner, a mixed solution was obtained.

The subsequent synthesis procedures were the same as in Example 1. In this manner, powder of BCeZYbCo serving as the second oxide was obtained. The composition of the obtained BCeZYbCo powder was BaCe_{0.205}Zr_{0.170}Yb_{0.125}Co_{0.500}O_{3-δ}. Further, the crystal structure of the obtained second oxide was analyzed by the same method as in Example 1. The second oxide obtained in Comparative Example 8 had a perovskite structure. Here, ICSD data for collation, used to analyze the crystal structure of the second oxide in Comparative Example 8 was ICSD181964 (BaCe_{0.45}Zr_{0.4}Y₀₁₅O_{3-δ}).

### 3. Preparation of air electrode

The preparation was performed in the same manner as in Example 1.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 8.

### (Measurement of ohmic resistance)

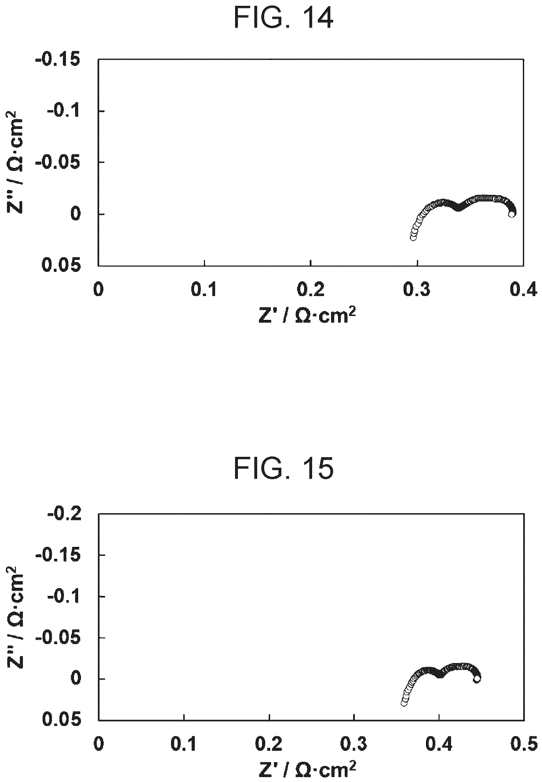

The measurement was performed in the same manner as in Example 1. Fig. 14 shows the Nyquist plot measured using the electrochemical cell in Comparative Example 8. The ohmic resistance was 0.31 Ωcm².

### [Comparative Example 9]

### (Preparation of air electrode)

### 1. Preparation of first oxide

Since the first oxide was not used in Comparative Example 9, the present step was omitted.

### 2. Preparation of second oxide

The preparation was performed in the same manner as in Comparative Example 8.

### 3. Preparation of air electrode

Since the first oxide was not used in Comparative Example 9, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was not confirmed in Comparative Example 9.

### (Measurement of ohmic resistance)

The measurement was performed in the same manner as in Example 1. Fig. 15 shows the Nyquist plot measured using the electrochemical cell in Comparative Example 9. The ohmic resistance was 0.37 Ωcm².

### [Comparative Example 10]

### (Preparation of air electrode)

### 1. Preparation of first oxide

LC serving as the first oxide was synthesized by the same method as in Example 4.

### 2. Preparation of second oxide

Since the second oxide was not used in Comparative Example 10, the present step was omitted.

### 3. Preparation of air electrode

Since the second oxide was not used in Comparative Example 10, the present step was omitted.

### (Preparation of half cell of fuel electrode and electrolyte)

The preparation was performed in the same manner as in Example 1.

### (Preparation of electrochemical cell for evaluation)

The preparation was performed in the same manner as in Example 1.

### (Confirmation on presence or absence of electrode peeling)

The confirmation was performed in the same manner as in Example 1. Electrode peeling was partially confirmed in Comparative Example 4.

### (Measurement of ohmic resistance)

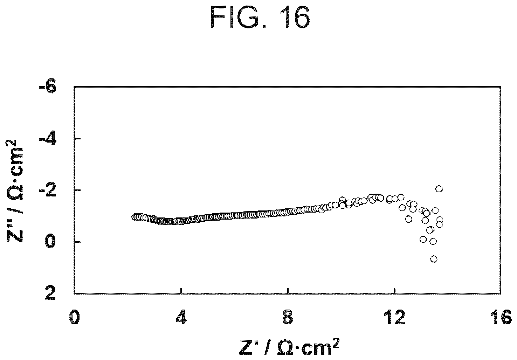

The measurement was performed in the same manner as in Example 1. Fig. 16 shows the Nyquist plot measured using the electrochemical cell in Comparative Example 10. The ohmic resistance was 3.73 Ωcm².

### (Conclusion and consideration)

The results of Examples 1 to 4 and Comparative Examples 1 to 10 will be described with reference to Table 1.

As listed in Table 1, in the electrochemical cells of Examples 1 to 4 in which the first electrode serving as the air electrode contained both the first oxide and the second oxide, electrode peeling did not occur, and the ohmic resistance was smaller than those of Comparative Examples 1 to 10 in which the first electrode contained only any one of the first oxide or the second oxide. Therefore, the membrane electrode assembly and the electrochemical cell of the present disclosure can reduce the ohmic resistance in the membrane electrode assembly and the electrochemical cell, which use the proton conductor as the electrolyte. Further, it can be seen that reduction of the ohmic resistance is realized by mixing BZYbCo serving as the second oxide with the first oxide used in SOFC of the related art.

Specifically, for example, based on the comparison between the results of Example 1, Comparative Example 1, and Comparative Example 4, the ohmic resistance in Example 1 in which both LSC and BZYbCo were used was 0.24 cm², which was less than both an ohmic resistance of 0.29 cm² in Comparative Example 1 in which only LSC was used and an ohmic resistance of 0.31 Ωcm² in Comparative Example 4 in which only BZYbCo was used. Typically, when two kinds of materials are mixed, the ohmic resistance is expected to be a value between the values of the two materials. That is, the ohmic resistance of Example 1 is expected to be a value between 0.29 Ωcm² and 0.31 Ωcm². However, the actual ohmic resistance in Example 1 was 0.24 Ωcm² in Example 1, which was a uniquely small ohmic resistance. The same result was also shown in a case where the results of Example 2, Comparative Example 2, and Comparative Example 4 are compared with each other, a case where the results of Example 3, Comparative Example 3, and Comparative Example 4 are compared with each other, and a case where the results of Example 4, Comparative Example 10, and Comparative Example 4 are compared with each other.

The reason for this results is considered as follows. The oxides such as LSC, LSCF, and LBC, which are known electrodes for SOFC, exhibit high electron conductivity, but have higher thermal expansion coefficients than that of the electrolyte. Further, LC which also exhibits similarly high electron conductivity even though the performance as the electrode for SOFC is poor has a higher thermal expansion coefficient than that of the electrolyte. Therefore, the inside of the electrode exhibits satisfactory electron conductivity, but bonding at the interface between the electrode and the electrolyte membrane is insufficient, and thus the ohmic resistance due to the bonding failure at the interface may occur. This result can also be seen from the comparison between Comparative Example 1, Comparative Example 2, and Comparative Example 3. The LBC used in Comparative Example 3 is a material exhibiting high electron conductivity higher than or equal to those of LSC in Comparative Example 1 and LSCF in Comparative Example 2. However, the ohmic resistance obtained in Comparative Example 3 is greater than the results of Comparative Example 1 and Comparative Example 2. It is considered that this result is related to the result that electrode peeling of LBC was observed in Comparative Example 3. The ohmic resistance is considered to increase when electrode peeling occurs or bonding failure at the interface between the electrode and the electrolyte membrane occurs even in a case where electrode peeling is not observed. That is, in Comparative Example 1, Comparative Example 2, and Comparative Example 3, the ohmic resistance due to the bonding failure was observed even though there was a difference in magnitude between the ohmic resistances. This result is consistent with the result that electrode peeling of LC was found in Comparative Example 10 and the ohmic resistance was extremely high.

Another reason is considered for a case where only BZYbCo serving as the second oxide was used in Comparative Example 4. Since the composition of BZYbCo is relatively similar to the composition of BZYb serving as a proton conductor, the physical properties of BZYbCo are similar to those of BZYb. That is, from the viewpoint of the thermal expansion coefficient, the thermal expansion coefficients of BZYbCo and BZYb are relatively similar to each other, and thus the possibility that bonding failure occurs at the interface between the electrode and the electrolyte membrane is low when BZYbCo is used. Further, even from the viewpoint of the electron conductivity, since BZYb is a material that has almost no electron conductivity, BZYbCo also has electron conductivity smaller than those of LSC, LSCF, LBC, and the like. That is, while the ohmic resistance due to bonding failure at the interface between the electrode and the electrolyte membrane was small in Comparative Example 4, the ohmic resistance is considered to occur inside the electrode.

As described above, the bonding failure at the interface between the electrode and the electrolyte membrane and the low electron conductivity inside the electrode are considered to be the factors of the ohmic resistance of the electrochemical cell. With respect to the both factors of the ohmic resistance, it is considered that the ohmic resistance of the electrochemical cell was reduced due to the combined effects of high electron conductivity of LSC, LSCF, LBC, or LC and improvement of the bonding properties at the interface between the electrode and the electrolyte membrane due to BZYbCo in Examples 1 to 3.

Next, the results of Comparative Example 2, Comparative Example 5, and Comparative Example 6 will be described. In Comparative Example 5, a mixture of LSCF and BZYbFe was used as the electrode, and the ohmic resistance of the electrochemical cell was 0.66 Ωm². This value is a value between 0.31 Ωm² which is the ohmic resistance of LSCF in Comparative Example 2 and 0.79 Ωm² which is the ohmic resistance of BZYbFe in Comparative Example 6. That is, the specific reduction in ohmic resistance due to mixed electrodes (that is, a mixture of a known electrode material for SOFC and BZYbFe was used) was not observed, which was different from the cases of Examples 1 to 3.

The same result as described above is also shown in Comparative Example 7. A mixture of LSCF and BZYb was used as the electrode in Comparative Example 7. Comparative Example 7 is an example in which an electrolyte material was mixed with a known electrode material for SOFC and shows the same technical idea as in the invention described in PTL 1. In a case where only BZYb was used as an electrode, since BZYb does not almost have the electron conductivity and does not function as an electrode catalyst, the evaluation of the electrochemical cell was not performed. However, as shown in the results of Comparative Example 2 and Comparative Example 7, it is evident that reduction in ohmic resistance cannot be expected by mixing an electrode with BZYb (that is, a mixture of a known electrode material for SOFC and BZYb was used as an electrode).

As shown in the results described above, it can be seen that the specific effect of reducing the ohmic resistance is exhibited only when BZYbCo is mixed with a known electrode material for SOFC. From the viewpoint of the thermal expansion coefficient, BZYbFe and BZYb should be expected to improve the bonding properties at the interface similarly to BZYbCo. However, BZYb and BZYbFe did not exhibit the effect of reducing the ohmic resistance. Particularly, BZYbFe is a material having electron conductivity due to containing Fe which is a transition element, but BZYbFe did not exhibit the effect shown by BZYbCo.

The exact reason why the specific effect was shown by BZYbCo is unknown, but the possibility that improvement of bonding properties is promoted by diffusion of a trace amount of elements at the particle level of a known electrode material for SOFC, BZYbCo, and the electrolyte and the electron conductivity inside the electrode and the bonding properties at the interface between the electrode and the electrolyte membrane are further improved in a case of containing Co may be considered as the reason.

Finally, Comparative Example 8 and Comparative Example 9 will be described. In Comparative Example 8, a mixture of LSC and BCeZYbCo was used as the electrode, and the ohmic resistance of the electrochemical cell was 0.31 Ωcm². This value is a value between 0.29 Ωcm² which is the ohmic resistance of LSC in Comparative Example 1 and 0.37 Ωcm² which is the ohmic resistance of BCeZYbCo in Comparative Example 9. That is, the specific effect of reducing the ohmic resistance was not observed when BCeZYbCo was mixed with a known electrode material for SOFC. The possibility of the effect obtained by the second oxide containing Co has been mentioned above, but the same effect was not observed when the second oxide contained Ce. The reason for this is not clear, but the possibility that the element diffusion behavior at the interface between the first oxide and the second oxide was different when the oxide contained Ce and a difference was observed in improvement of bonding properties at the particle level may be considered.

As described above, it was found that the ohmic resistance of the electrochemical cell was reduced when BaZrYb and Co were used as the second oxide.

**[Table 1]**

| | Electrode | | Electrode peeling | Ohmic resistance* (Ωm²) |
|---|---|---|---|---|
| | First oxide | Second oxide | | |
| Example 1 | LSC | BZYbCo | Not found | 0.24 |
| Example 2 | LSCF | BZYbCo | Not found | 0.25 |
| Example 3 | LBC | BZYbCo | Not found | 0.27 |
| Example 4 | LC | BZYbCo | Not found | 0.27 |
| Comparative Example 1 | LSC | - | Not found | 0.29 |
| Comparative Example 2 | LSCF | - | Not found | 0.31 |
| Comparative Example 3 | LBC | - | Found | 0.41 |
| Comparative Example 4 | - | BZYbCo | Not found | 0.31 |
| Comparative Example 5 | LSCF | BZYbFe | Not found | 0.66 |
| Comparative Example 6 | - | BZYbFe | Not found | 0.79 |
| Comparative Example 7 | LSCF | BZYb | Not found | 0.62 |
| Comparative Example 8 | LSC | BCeZYbCo | Not found | 0.31 |
| Comparative Example 9 | - | BCeZYbCo | Not found | 0.37 |
| Comparative Example 10 | LC | - | Found | 3.73 |

### Industrial Applicability

The membrane electrode assembly according to the present disclosure is suitable for a system that uses an electrochemical cell of a hydrogen generation system or a fuel cell system. The membrane electrode assembly according to the present disclosure can also be used as an electrochemical hydrogen pump of a hydrogen purification device, a hydrogen compression device, or the like.

### Reference Signs List

10 membrane electrode assembly
11 electrolyte membrane
12a first main surface
12 first electrode
13 second electrode
20 electrochemical cell
30 stack
1000 fuel cell system
1014 housing
1021 oxidant gas supplier
1022 raw material supplier
1023 raw material gas supply path
1024 oxidant gas supply path

## Claims

1. A membrane electrode assembly comprising:
a first electrode; and
an electrolyte membrane that contains an oxide having proton conductivity,
wherein the first electrode contains a first oxide and a second oxide,
the first oxide is a first perovskite compound represented by Compositional Formula ABO₃,
where in the first perovskite compound, constituent elements of an A site include at least one selected from the group consisting of La, Sr, and Ba, and constituent elements of a B site include at least one selected from the group consisting of Co and Fe, and
the second oxide is a second perovskite compound formed of Ba, Zr, Yb, one or more of first transition elements including at least Co, and O.

2. The membrane electrode assembly according to claim 1,
wherein the second oxide is formed of Ba, Zr, Yb, Co, and O.

3. The membrane electrode assembly according to claim 1,
wherein the first oxide satisfies any one of the following items (1) to (4),
(1) the constituent elements of the A site include La and Sr, and the constituent elements of the B site include Co and Fe,
(2) the constituent elements of the A site include La and Sr, and the constituent elements of the B site include Co,
(3) the constituent elements of the A site include La and Ba, and the constituent elements of the B site include Co, and
(4) the constituent elements of the A site include La, and the constituent elements of the B site include Co.

4. The membrane electrode assembly according to claim 1,
wherein the first electrode and the electrolyte membrane are in contact with each other.

5. The membrane electrode assembly according to claim 1,
wherein the electrolyte membrane contains at least one selected from the group consisting of a compound represented by Chemical Formula Baₐ₁Zrt₋ₓ₁M1ₓ₁O_{3-δ1}, a compound represented by Chemical Formula Baₐ₂Ce₁₋ₓ₂M2ₓ₂O_{3-δ2}, and a compound represented by Chemical Formula Baₐ₃Zr_{1-x3-y3}Ceₓ₃M3_{y3}O_{3-δ3},
M1, M2, and M3 each include at least one selected from the group consisting of Pr, Nd, Pm, Sm, Eu, Gd, Tb, Dy, Ho, Er, Tm, Yb, Y, Sc, In, and Lu, and
expressions of 0.95 ≤ a1 ≤ 1.05, 0.95 ≤ a2 ≤ 1.05, 0.95 ≤ a3 ≤ 1.05, 0 < x1 < 1, 0 < x2 < 1, 0 < x3 < 1, 0 < y3 < 1, 0 < δ1 < 0.5, 0 < δ2 < 0.5, and 0 < δ3 < 0.5 are satisfied.

6. The membrane electrode assembly according to claim 5,
wherein M1 represents Yb.

7. An electrochemical cell comprising:
the membrane electrode assembly according to any one of claims 1 to 6; and
a second electrode,
wherein the first electrode, the electrolyte membrane, and the second electrode are provided in this order.

8. The electrochemical cell according to claim 7,
wherein the second electrode contains at least one selected from the group consisting of NiO and Ni.

9. A fuel cell system comprising:
the electrochemical cell according to claim 7;
an oxidant gas supply path; and
a raw material gas supply path,
wherein the first electrode is connected to the oxidant gas supply path, and
the second electrode is connected to the raw material gas supply path.
